# EUROPÄISCHE PATENTANMELDUNG

(11) **EP 0 574 010 A2**
(43) Veröffentlichungstag der Anmeldung: **15.12.1993**
(21) Anmeldenummer: 93109394.2
(22) Anmeldetag: 11.06.1993
(51) Int. Cl.: H02K 29/08, H02K 29/10

(54) **Elektronisch kommutierter Motor, gesteuert mit Gleichstromimpulsen**

(30) Priorität: 11.06.1992 SI 9200102
(71) Anmelder: IMP CRPALKE d.d., SI-61000 Ljubljana (SI)
(72) Erfinder: Zadravec, Jurica, SL-61000 Ljubljana (SL)
(74) Vertreter: Patentanwälte Viering, Jentschura & Partner

(57) **Zusammenfassung**

Elektronisch kommutierter Motor, gesteuert mit Gleichstromimpulsen, ist derart konstruiert, dass er von einem preisgünstigen und einfachen elektronischen Kommutator gesteuert werden kann, der rechteckige Steuerimpulse erzeugt, mit denen die einzelnen Phasen des Motors ein- und ausgeschaltet werden. Diese Eigenschaft des Motors wird durch eine besondere Konstruktion der ausgeprägten Pole 4,4',4'' für die einzelnen Phasen erzielt, wobei die Zentrumswinkel τ dieser ausgeprägten Pole 4,4',4'' untereinander gleich sind und auch für die Magnetpole 3 des Läufers 2 gleich sind. Beim Betrieb des Motors ist aktiv, d.h. über die Erregerwicklung 6,6',6'' erregt, immer nur ein Pol 4, 4', 4'', wogegen der andere, der gleichen Phase zugehörende Pol passiv ist und aus mehreren übrigen ausgeprägten Polen oder aus in deren Symmetralen radial aus dem Ständer 1 in Richtung des Läufers 2 gerichteten passiven Polsegmenten 7, 7', 7'' zusammengesetzt sein kann; die gemeinsame Breite dieses passiven Poles ist dabei ein Vielfaches der Zentrumwinkel.

## Beschreibung

Die Erfindung gehört in den Bereich des Aufbaus elektrischer Maschinen mit elektronischer Kommutierung und wird in die Klasse H 02 K 29/00 der internationalen Patentklassifikation eingereiht.

Elektronisch kommutierte Motoren sind Synchronmaschinen, ausgestattet mit die magnetischen Fühlern, die die Lage des Läufers abtasten und die einzelnen Wicklungen des Ständers ansteuern, so dass immer diejenigen Phasenwicklungen des Ständers erregt sind, die in Hinsicht auf die momentane Lage des Läufers den grössten Drehmoment auf der Motorachse erzielen.

Die induzierte Spannung einer bekannten Synchronmaschine ist eine Wechselspan nung, ihr zeitlicher Verlauf ist meist sinusförmig. Ein elektronischer Kommutator muss deswegen eine Wechselspannung mit einem sinusförmigen zeitlichen Verlauf erzeugen, damit die Phasenwicklungen des elektronisch kommutierten Motors mit elektrischer Energie gespeist werden können. Die Grundfunktionen des elektronischen Kommutators bestehen dabei in der Feststellung der Lage des Läufers, der Erzeugung der Wechselspannung, d.h. einer Zerhackung mit einer solchen Frequenz, die der momentanen Drehgeschwindigkeit des Läufers entspricht, und in der Zuteilung der elektrischen Energie an die einzelnen Phasenwicklungen in Abhängigkeit von der momentanen Lage des Läufers. Die zusätzlichen Funktionen des elektronischen Kommutators sind dabei noch die Begrenzung und die Regelung des elektrischen Stromes, die Regelung der Drehzahl des Motors, der Schutz des Motors u.a.

Wenn ein guter Wirkungsgrad des Motors erzielt werden soll, muss der elektronische Kommutator gut an die Eigenschaften des Motors angepasst sein, denn ein jeder Unterschied zwischen der Form, d.h. dem zeitlichen Verlauf der induzierten Spannung des Motors, und der vom elektronischen Kommutator erzeugten Form der Speisespannung wird in Verluste umgesetzt.

Das bei elektronisch kommutierten Motoren, die wegen ihrer hohen spezifischen Leistung und der langen Lebensdauer immer mehr an Bedeutung gewinnen, zu Iösende technische Problem ist eine derartige Konstruktion des Motors, die die Verwendung eines einfachen und preisgünstigen elektronischen Kommutators ermöglichen wird, wobei der gute Wirkungsgrad des Motors erhalten bleiben soll.

Die Lösung des technischen Problems wird in der Fortsetzung genauer beschrieben und in den Zeichnungen dargestellt, in denen zeigen:
- Fig. 1: den Querschnitt durch eine Einphasen-Synchronmaschine mit dem Diagramm der induzierten rechteckförmigen Spannung,
- Fig. 2: den Querschnitt durch eine Einphasenausführung der erfindungsgemässen Synchronmaschine mit dem Diagramm des Verlaufs der induzierten rechteckförmigen Spannung,
- Fig. 3: den Querschnitt durch eine Dreiphasenausführung der erfindungsgemässen Synchronmaschine und
- Fig. 4: das Schaltbild einer Einphasenausführung eines erfindungsgemässen elektronischen Kommutators.

Der einfachste elektronische Kommutator, der eingebaut werden kann, enthält für die Speisung einer jeden Phase einen Fühler der Läuferlage, einen elektronischen Schalter für die Ein- und Abschaltung der Phase, einen Strombegrenzer und einen Begrenzer der bei der Abschaltung der Phase entstehenden Überspannung.

Ein solcher einfachster elektronischer Kommutator kann für jede Phase rechteckige elektrische Gleichspannungsimpulse erzeugen. Wenn mit einem solchen Kommutator ein Motor mit einer bestimmten Drehrichtung gesteuert werden soll, muss der Motor derart gefertigt sein, dass die induzierte Spannung eine Rechteckform besitzt (dass der Zeitverlauf der induzierten Spannung eine rechteckige Form besitzt), dass der Motor in einer Zwei- oder Mehrphasenausführung hergestellt ist und dass der Motor fehlerfrei mit einer Halbwellenspeisung arbeiten kann.

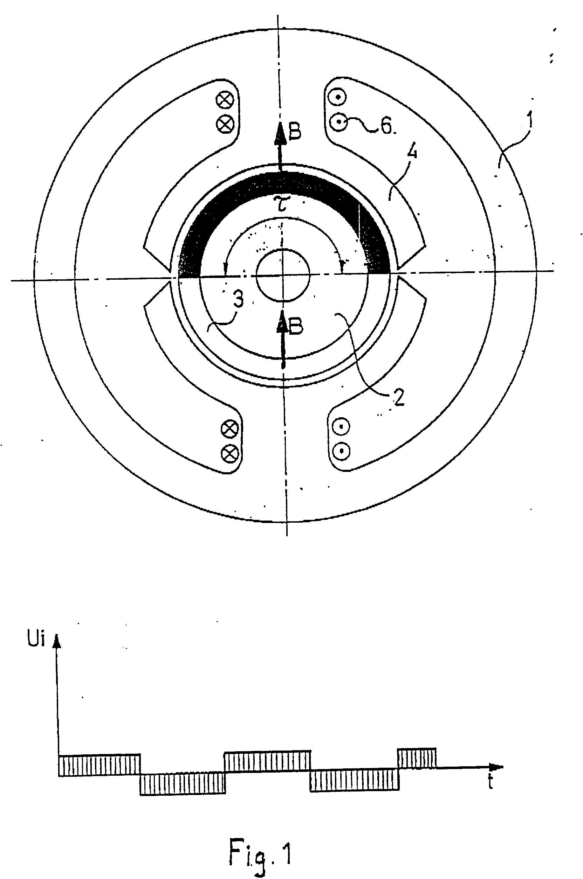

Die Einphasepausführung der Synchronmaschine, deren induzierte Spannung eine Rechteckform besitzt, ist schematisch in Fig. 1 dargestellt Eine solche Maschine besitzt einen Ständer 1, an dem eine Erregerwicklung 6 angebracht ist, wogegen am Läufer 2 zwei Magnetpole 3, ausgeführt mit Dauermagneten mit wechselnder Polarität, angebracht sind. Es ist bekannt, dass die Bedingungen für die Erzielung einer Rechteckform der induzierten Spannung die folgenden sind: die magnetische Flussdichte im Luftspalt muss konstant sein, die Pole müssen ausgeprägt sein und die Polbreite muss der Polteilung τ gleich sein. Wie aus Fig. 1 ersichtlich ist, können bei diesen Bedingungen an der Maschine nur zwei Pole 4, d.h. ein Polpaar, angebracht werden. Daraus geht hervor, dass die Maschine nur in einer Einphasenausführung hergestellt werden kann. Um eine Maschine mit definierter Drehrichtung, d.h. eine Mehrphasenmaschine mit ausgeprägten Polen herstellen zu können, muss unumgänglich Platz am Umfang des Ständers 1 gewonnen werden. Deshalb soll untersucht werden, was geschieht, wenn die Breite des Ständerpoles ein Vielfaches der Polteilung ist.

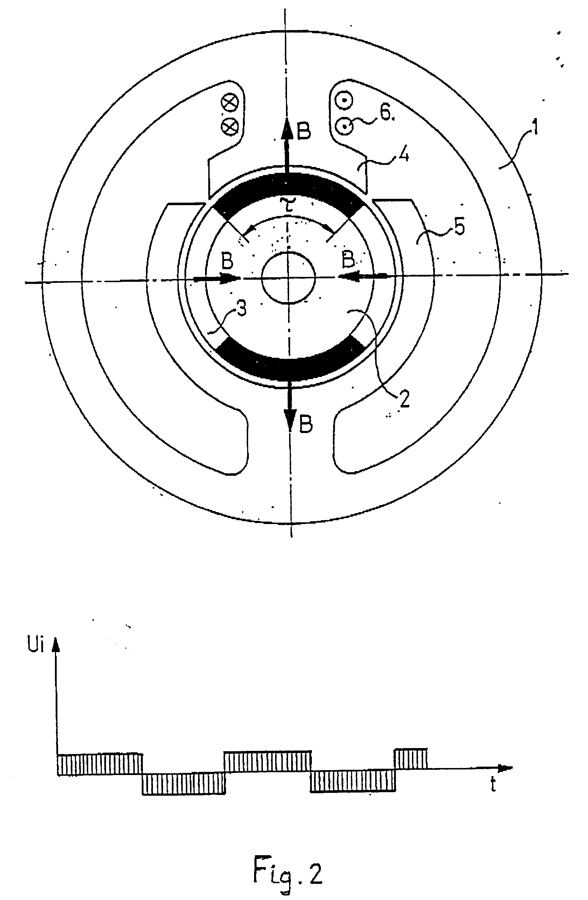

Fig. 2 stellt schematisch eine Einphasen-Synchronmaschine dar, die aus einem Ständer 1 und einem Läufer 2 besteht. Am Läufer 2 sind vier Magnetpole 3, ausgeführt mit Dauermagneten mit wechselnder Polarität, angebracht. Der Ständer 1 ist mit zwei Polen 4 und 5 ausgestattet. Der obere Pol 4 besitzt eine Breite τ, die der Breite des Läuferpoles entspricht, wogegen der untere Pol 5 eine Polbreite 3τ besitzt. Der obere Pol 4 ist mit einer Erregerwicklung 6 ausgestattet und wird aktiver Pol genannt, wogegen der Pol 5 nicht erregt wird und passiver Pol genannt wird. Wenn die Maschine nach Fig. 2 an eine Spannung angeschlossen wird, kann festgestellt werden, dass sich die Maschine ähnlich wie die Maschine nach Fig. 1 benimmt. Die beiden Verläufe, der induzierten Spannung besitzen eine rechteckige Spannung. Im Raum, der vom passiven Pol eingenommen wird, können jedoch die Wicklungen der anderen Phasen angebracht werden, die dann erregt werden, wenn die Wicklung 6 nicht erregt ist.

Die günstigste ZahI der Phasen der erfindungsgemässen Maschine wird gemäss der Forderung gewählt, dass die Maschine mit einer Halbwellenerregung arbeiten muss. Für eine Halbwellenerregung ist am günstigsten ein Dreiphasensystem, bei dem die zweite und die dritte Phase eine negative Halbwelle der ersten Phase darstellen.

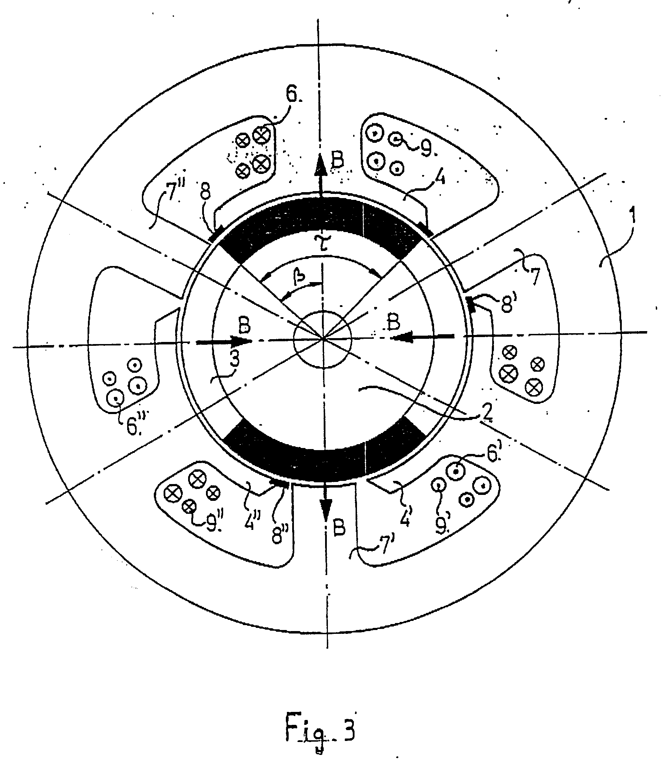

Fig. 3 stellt eine Dreiphasenausführung der erfindungsgemässen Maschine dar. Die Maschine ist zusammengesetzt aus einem Ständer 1 und einem Läufer 2 und aus anderen, nicht dargestellten bekannten Teilen des Motors wie einem Gehaüse, Lagern, einer Achse und anderen Maschinenelementen. Am Läufer 2 befinden sich vier Magnetpole 3, ausgeführt mit Dauermagneten mit wechselnder Polarität. Der Ständer 1 ist ausgestattet mit drei ausgeprägten Polen 4, 4' und 4'', die eine Polbreite τ besitzen (gleich der Polteilung) und mit Wicklungen 6, 6' und 6'' ausgestattet sind. Der Ständer 1 besitzt also drei aktive Pole. Wenn nur ein aktiver Pol 4 mit der Breite τ erregt wird, dann stellt der ganze restliche Teil des Ständers (2π - τ) einen dem aktiven Pol 4 angepassten passiven Pol dar, der eine Polbreite 3τ besitzt und aus mehreren Poleilsegmenten 4', 4'', 7, 7', 7''zusammengesetzt ist Dadurch erhält man einen Dreiphasenmotor, dessen Kennzeichen darin bestehen, dass der Motor tadellos arbeiten wird, wenn die einzelnen Phasenwicklungen der Reihe nach mit elektrischen Gleichspannungsimpulsen gespeist werden, wobei die Drehrichtung durch die Reihenfolge der Erregung der einzelnen Phasen bestimmt ist. Die induzierte Spannung in den einzelnen Phasenwicklungen hat jedoch einen rechteckigen Zeitverlauf.

Für die Steuerung des elektronischen Kommutators müssen in den Motor noch Magnetfühler 8, 8', 8'' eingebaut werden, die über dem Läufer positioniert sind und für den Winkel β, der 90 Grad des elektrischen Winkels entspricht, von der Symmetrale desjenigen Poles verschoben sind, der von dem einzelnen Fühler gesteuert wird.

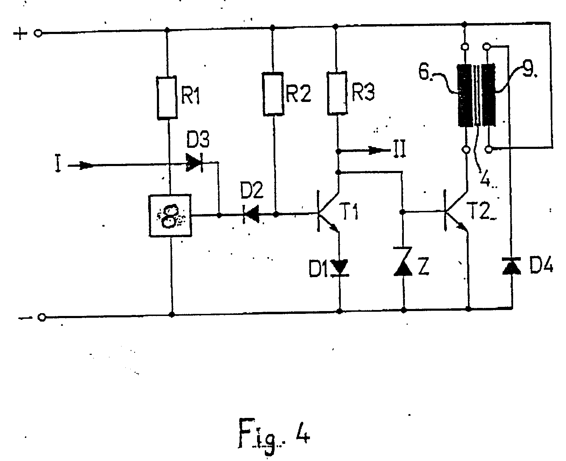

Es wurde auf diese Weise eine Maschine erhalten, deren elektronische Steuerung ausserordentlich einfach ist. Das gesamte Schaltbild dieser Steuerung ist aus Fig. 4 ersichtlich.

Der Magnetfühler MS schaltet den Transistor T₁ ein, wobei dieser Transistor T₁ dann den Transistor T₂ einschaltet. Beide Transistoren arbeiten als Schalter, so dass die Verluste möglichst gering sind. Der Maximalstrom (der Anlaufstrom des Motors) des Transistors T₂ kann durch die Begrenzung der Basisspannung des Transistors T₂ begrenzt werden. Diese Aufgabe wird durch die Zener-Diode Z ausgeführt. Die Diode D₁ erhöht das Potential des Emittors des Transistors T₁, damit dieser nach Bedarf vollkommen sperrt. Die Dioden D₂ und D₃ bilden die elektrische Verbindung mit der vorhergehenden Phase am Anschluss I und mit der folgenden Phase am Anschluss II mit der Aufgabe, dass beim Einschalten einer bestimmten Phase, ohne RÜcksicht auf das Signal des Magnetfühlers, die vorhergehende Phase abschaltet. Damit wird die Überlappung des Eingeschaltetseins zweier Phasen vermieden.

Für die Beseitigung von Überspannungsspitzen, die bei der Abschaltung der einzelnen Phase entstehen, werden die einzelnen Pole mit einer Hilfswicklung 9, 9', 9'' ausgestattet, und mit Hilfe einer Diode D₄ werden diese im Gegentakt mit der Wicklung 6, 6', 6'' an die Betriebsspannung angeschlossen, wie das aus Fig. 4 ersichtlich ist. Bei der Abschaltung der Phasenwicklung 6 induziert sich eine Spannung auch in der Hilfswicklung 9. Die in der Induktivität des Poles gespeicherte Energie wird mit Hilfe der Hilfswicklung 9, 9', 9'' und der Diode D₄ ans Netz zurückgegeben, wogegen die induzierte Spannung in der negativen Halbwelle nicht genügt, um in der Hilfswicklung 9, 9', 9'' einen Kurzschlusstrom zu verursachen.

## Patentansprüche

1. Elektronisch kommutierter Motor, gesteuert mit Gleichstromimpulsen, dadurch gekennzeichnet, dass am Umfang des Läufers (2) mindestens vier Magnetpole (3) befestigt sind und dass sich aus dem Ständer (1) radial in Richtung zum Läufer (2) mindestens drei ausgeprägte Pole (4, 4', 4'') und in den Symmetralen zwischen den ausgeprägten Polen (4, 4', 4'') mindestens drei passive Polsegmente (7, T, 7'') erstrecken, wobei die Magnetpole (3) untereinander den gleichen Zentrumwinkel (τ) besitzen, der gleichzeitig auch für alle ausgeprägten Pole (4, 4', 4'') gleich ist und dass sich auf allen ausgeprägten Polen (4, 4', 4'') sowohl Erregerwicklungen (6, 6', 6'') als auch Hilfswicklungen (9, 9', 9'') befinden.

2. Motor nach Anspruch 1, dadurch gekennzeichnet, dass die Magnetpole (3) Dauermagnete sind.

3. Motor nach Anspruch 1, dadurch gekennzeichnet, dass die Magnetpole (3) Elektromagnete sind.

4. Motor nach Anspruch 1, dadurch gekennzeichnet, dass an den einen Enden der ausgeprägten Pole (4, 4', 4'') in Rotationsrichtung Magnetfühler (8, 8', 8'') befestigt sind.
